Europäisches Patentamt

**European Patent Office**

**Office européen des brevets**

(11) Veröffentlichungsnummer: **0 075 674**
**B1**

(12) **EUROPÄISCHE PATENTSCHRIFT**

(45) Veröffentlichungstag der Patentschrift:
**18.12.85**

(51) Int. Cl.⁴: **G 07 D 7/00**, G 06 K 19/06,
G 07 F 7/08

(21) Anmeldenummer: **82106709.7**

(22) Anmeldetag: **24.07.82**

(54) Synthetisch hergestellte, maschinenlesbare optische Echtheitsmerkmale für Wertdokumente.

(30) Priorität: **10.09.81 CH 5854/81**

(43) Veröffentlichungstag der Anmeldung:
**06.04.83 Patentblatt 83/14**

(45) Bekanntmachung des Hinweises auf die Patenterteilung:
**18.12.85 Patentblatt 85/51**

(84) Benannte Vertragsstaaten:
**DE FR GB IT NL SE**

(56) Entgegenhaltungen:
**CH - A - 598 661**
**DE - A - 2 538 875**
**DE - B - 2 555 214**
**US - A - 4 034 211**
**US - A - 4 204 638**
**US - A - 4 211 918**

(73) Patentinhaber: **LGZ LANDIS & GYR ZUG AG,**
**CH-6301 Zug (CH)**

(72) Erfinder: **Baltes, Heinrich Peter, Zeughausgasse 21,**
**CH-6300 Zug (CH)**
Erfinder: **Romerio, Michel Vincent, Grand'Places 14,**
**CH-1700 Fribourg (CH)**

(74) Vertreter: **Müller, Hans-Jürgen, Dipl.-Ing. et al, Müller,**
**Schupfner & Gauger**
**Lucile-Grahn-Strasse 38 Postfach 80 13 69,**
**D-8000 München 80 (DE)**

# Beschreibung

## Anwendungsgebiet und Zweck

Die Erfindung bezieht sich auf synthetisch hergestellte, maschinenlesbare optische Echtheitsmerkmale für Wertdokumente gemäss dem Oberbegriff des Patentanspruchs 1.

Solche Wertdokumente sind z.B. Banknoten, Schecks, Wertpapiere, Identitätsausweise, Kennkarten, Kreditkarten, Fahrkarten, Eintrittskarten und dergleichen, die in vielen Ländern mehr und mehr in Annahmegeräten maschinell auf Echtheit geprüft werden.

Die meisten dieser Wertdokumente können mit modernen Reproduktionsmitteln mit nicht allzu grossem Aufwand gefälscht werden.

## Stand der Technik

Es sind zahlreiche Vorschläge bekannt, die darauf abzielen, auf solchen Wertdokumenten Echtheitsinformationen zu speichern, welche den für eine erfolgversprechende Fälschung erforderlichen Aufwand und damit die Fälschungssicherheit erhöhen. Bekannt ist insbesondere die Aufzeichnung von Echtheitsinformationen in Form von optischen Markierungen, die maschinell gelesen werden können.

Aus der DE-A-25 38 875 ist ein maschinell lesbares Wertdokument bekannt, welches mindestens ein holographisch erzeugtes Phasen-Beugungsgitter aufweist, das den Strahlengang einer aus einer Lichtquelle und einem Lichtempfänger bestehenden optischen Leseeinrichtung modifiziert, wobei das Phasen-Beugungsgitter eine definierte, die Echtheitsinformation darstellende Struktur aufweist, der Lichtempfänger aus mindestens zwei in verschiedenen Beugungsordnungs-Richtungen angeordneten Fotodetektoren besteht und an die Fotodetektoren eine Entscheidungslogik angeschlossen ist, die ein Echtheitssignal abgibt, wenn die Energieanteile in den mit Fotodetektoren belegten Beugungsordnungs-Richtungen in einem bestimmten Verhältnis zueinander stehen.

Solche holographisch hergestellte Phasen-Beugungsgitter sind symmetrisch und besitzen daher auch eine symmetrische Beugungsfigur, d.h. neben der erwünschten Beugungsordnung n tritt auch noch in vielen Fällen die unerwünschte konjugierte Beugungsordnung -n auf. Ausserdem sind in der Regel auch immer viele andere unerwünschte Beugungsordnungen vorhanden. Dies führt zu einer niedrigen Lichtausbeute-Effizienz der nützlichen Beugungsordnung, z.B. von höchstens 40% im Falle der Beugungsordnung «1» gewisser Gitter mit Rechteckprofil.

Bekannte Phasen-Beugungsgitter sind periodische geometrische Gebilde, und deshalb z.B. unter einem Mikroskop leicht erkennbar, wobei sie den Echtheitsmerkmal-Typ verraten, was aber noch nicht heisst, dass diese Echtheitsmerkmale dann technologisch leicht nachzumachen wären.

Die Kodierungsmöglichkeiten, d.h. die Anzahl verschiedener Beugungsmuster im Rahmen der räumlichen Auflösung der Anordnung, sind ausserdem beschränkt.

Aus der DE-A-23 52 366 und der DE-A-25 55 214 sind Wertdokumente bekannt, deren Echtheitsmerkmale sägezahnförmige Querschnitte besitzen. Jedoch sind die Abmessungen dieser Sägezähne absichtlich so gross gewählt, dass das einfallende Licht nicht durch Beugung, sondern durch Reflexion bzw. optische Brechung gemäss den Gesetzen der geometrischen Optik modifiziert wird.

In jeder der beiden letztgenannten Druckschriften wird allerdings noch zusätzlich eine zweite, von der Sägezahnform vollständig unabhängige Lösung beschrieben, welche Lichtbeugung als Auslesekriterium verwendet, wobei jedoch in beiden Fällen jeder Hinweis auf die genaue Form der Echtheitsmerkmal-Querschnitte fehlt. Ausserdem enthält die DE-A-25 55 214 keine Angabe über die Eliminierung der unerwünschten Beugungsordnungen und wird diese Eliminierung in der Lösung nach der DE-A-23 52 366 nur mittels eines grossen zusätzlichen Aufwandes an Filtervorrichtungen realisiert.

## Aufgabe und Lösung

Der Erfindung liegt die Aufgabe zugrunde, lichtbeugende Strukturen als synthetisch herstellbare, maschinenlesbare optische Echtheitsmerkmale für Wertdokumente zu finden, die folgende Eigenschaften besitzen:

– Eine hohe Lichtausbeute-Effizient der nützlichen Beugungsordnung von mehr als 40% und eine entsprechende Unterdrückung der anderen Beugungsordnungen.

– Keine symmetrischen Beugungsfiguren.

– Eine weitgehend nichtperiodische, schwer erkennbare geometrische Anordnung.

– Eine grosse Anzahl Kodiermöglichkeiten.

– Optische Unempfindlichkeit gegenüber gewöhnlichen Fabrikationstoleranzen.

Die genannte Aufgabe wird erfindungsgemäss durch die im Kennzeichen des Patentanspruchs 1 angegebenen Merkmale gelöst.

## Beschreibung

Ein Ausführungsbeispiel der Erfindung ist in der Zeichnung dargestellt und wird im folgenden näher beschrieben.

Es zeigt

Fig. 1 eine schematische Darstellung einer bekannten optischen Transmissionsanordnung zum Lesen einer beliebigen Phasenstruktur,

Fig. 2 eine Phasenstruktur mit eindimensional nebeneinander angeordneten Teilstrukturen und parallelen Sägezahnfurchen,

Fig. 3 eine Phasenstruktur mit eindimensional nebeneinander angeordneten Teilstrukturen und ausserhalb der Teilstruktur nichtparallelen Sägezahnfurchen,

Fig. 4 eine Phasenstruktur mit zweidimensional nebeneinander angeordneten Teilstrukturen,

Fig. 5 eine Phasenstruktur mit einer Vielzahl zweidimensional nebeneinander angeordneten Teilstrukturen, jede nur eine einzige Sägezahnfurche beliebiger Richtung enthaltend,

Fig. 6 eine schematische Darstellung einer optischen Transmissionsanordnung zum Lesen der Teilstrukturen mit Licht der Beugungsordnung 1.

Gleiche Bezugszahlen bezeichnen in allen Figuren der Zeichnung gleiche Teile.

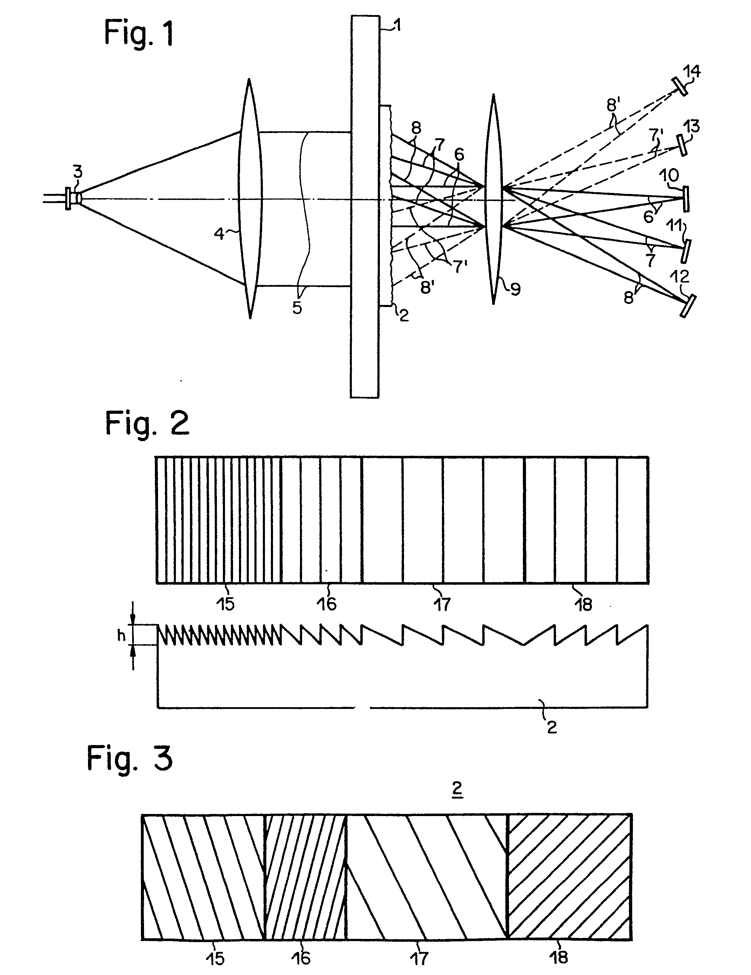

Beschreibung der Fig. 1

In der Fig. 1 ist eine bekannte optische Transmissionsanordnung zum Lesen einer beliebigen Phasenstruktur, z.B. eines Gitters mit Rechteckprofil, schematisch dargestellt.

Auf einem Informationsträger 1, z.B. einem Wertdokument, befindet sich eine Phasenstruktur 2. Eine Lichtquelle 3, die z.B. monochromatisches Licht aussendet, wirft über eine Kondensorlinse 4 einen Leselichtstrahl 5 durch den lichtdurchlässigen Informationsträger 1 auf die Phasenstruktur 2. Ist diese beliebig, so zerlegt sie den Leselichtstrahl 5 in bekannter Weise in eine Gruppe von Lichtstrahlen verschiedener Beugungsordnungen, die auf der der Lichtquelle 3 abgewandten Seite der Phasenstruktur 2 aus dieser austreten.

In der Zeichnung sind der Einfachheit halber nur die austretenden Lichtstrahlen der Beugungsordnung «0» (Lichtstrahlen 6), der Beugungsordnung «1» (Lichtstrahlen 7), der Beugungsordnung «2» (Lichtstrahlen 8) sowie gestrichelt, der konjugierten Beugungsordnung «−1» (Lichtstrahlen 7') und der konjugierten Beugungsordnung «−2» (Lichtstrahlen 8') dargestellt. Eine Sammellinse 9 fokussiert die Lichtstrahlen der verschiedenen Beugungsordnungen auf deren zugeordnete Fotodetektoren 10, 11, 12, 13 und 14. Jeder Fotodetektor ist dabei in einer anderen räumlichen Richtung angeordnet.

Beschreibung der Fig. 2, der Fig. 3, der Fig. 4 und der Fig. 5

In der Fig. 2, der Fig. 3 und der Fig. 4 ist je eine lichtbeugende optische Phasenstruktur 2 schematisch und nicht proportionsgerecht dargestellt, wobei jede Phasenstruktur aus m Teilstrukturen z.B. der Grösse 0,5 mm × 0,5 mm besteht. In der Zeichnung ist m = 4 gewählt.

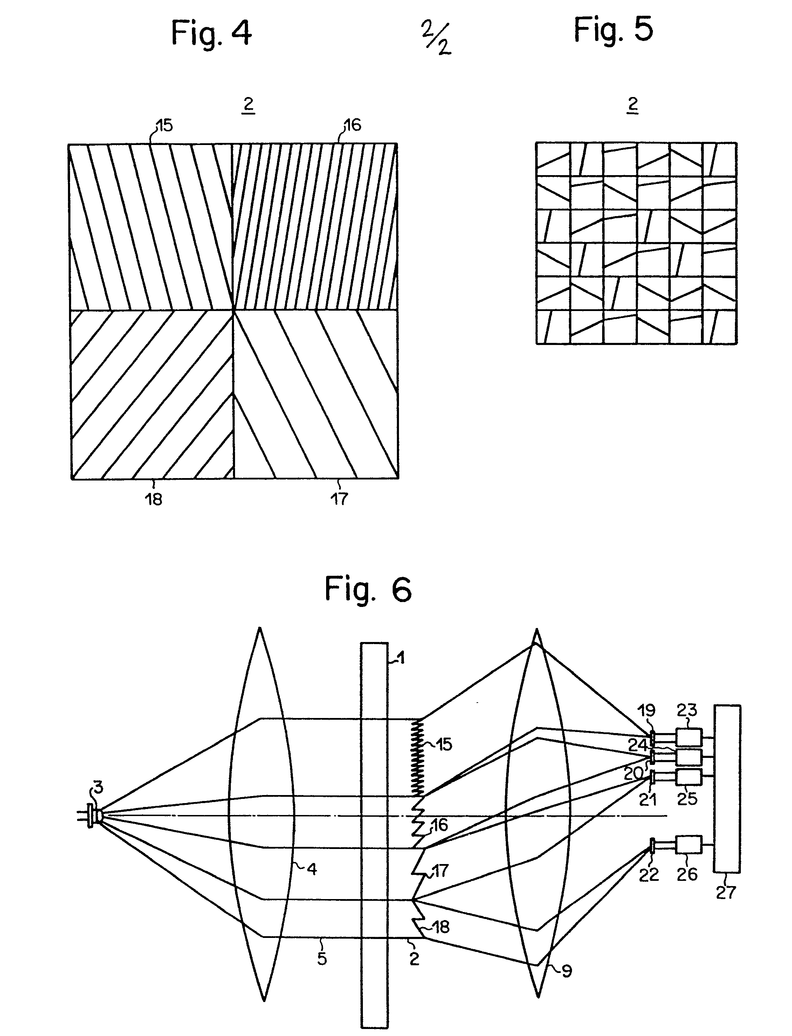

In der Fig. 2 und in der Fig. 3 sind Teilstrukturen 15, 16, 17 und 18 eindimensional, in der Fig. 4 zweidimensional nebeneinander in einer gemeinsamen Fläche angeordnet, wobei die Fläche theoretisch gekrümmt sein kann. Jede der m = 4 Teilstrukturen 15, 16, 17 und 18 besitzt an ihrer Oberfläche parallele Sägezahnfurchen, z.B. 200 Furchen je mm, mindestens jedoch 10 Furchen je Teilstruktur, deren sägezahnförmige Querschnitte innerhalb einer jeden Teilstruktur gleich sind, d.h. gleiche Sägezahnhöhe und gleiche Sägezahn-Basislänge, besitzen. Die m Teilstrukturen brauchen nicht notwendigerweise flächenmässig alle gleich gross und auch nicht quadratisch zu sein.

In der Fig. 5 ist ebenfalls eine zweidimensionale Anordnung von Teiltrukturen dargestellt, bei welcher der Wert von m möglichst gross zu wählen ist (grösser als in der vereinfachten Fig. 5, bei der die Darstellung auf m = 36 beschränkt wurde).

Jede Teilstruktur ist dabei sehr klein und besitzt nur eine einzige Sägezahnfurche, deren räumliche Richtung – oder allgemeiner formuliert, deren Codierungsparameterwert – von Teilstruktur zu Teilstruktur statistisch über die Gesamtoberfläche der Phasenstruktur 2 verteilt ist. In der Fig. 5 ist die Richtung jeder einzelnen Sägezahnfurche durch einen Strich angedeutet.

Für alle Figuren 2 bis 5 gilt:

– Die Phasenstruktur ist entweder lichtundurchlässig und mittels optischer Reflexionsanordnungen auslesbar oder lichtdurchlässig und mittels optischer Transmissionsanordnungen auslesbar.

– Die effektive Sägezahnhöhe $h_{eff}$, d.h. die maximale optische Wegdifferenz, muss ein ungeradzahliges Vielfaches der Wellenlänge $\lambda$ des verwendeten Lichtes sein.

Es gilt demnach! $h_{eff} = (2k + 1) \lambda$, mit k = 1, 2, 3, ... Stellt h die Höhe des Sägezahns dar (Fig. 2), so gilt:

– bei Transmissionsanordnungen $h_{eff} = h (n_2−n_1) = (2k + 1) \lambda$ bzw. $h = (2k + 1) \lambda/(n_2−n_1)$, wobei $n_2$ der Brechungsindex des Sägezahnmaterials, $n_1$ der Brechungsindex der Umgebung z.B. der Luft ist, und

– bei Reflexionsanordnungen $h_{eff} = 2h = (2k +1)\lambda$, d.h.: $h = (2k +1)\lambda/2$

– Damit die Gesetze der Fourieroptik näherungsweise gelten, muss die Sägezahn-Basislänge mindestens $3\lambda$ sein. Besonders geeignet sind Werte der Sägezahn-Basislänge zwischen $5\lambda$ und $30\lambda$.

Die Sägezahnfurchen der einzelnen Teilstrukturen können entweder – wie in der Fig. 2 dargestellt – parallel zueinander verlaufen oder – wie in der Fig. 3, der Fig. 4 und der Fig. 5 dargestellt – eine beliebige Richtung zueinander besitzen. Innerhalb einer Teilstruktur sind sie jedoch alle parallel zueinander. Die Sägezahn-Steigungen bzw. die Sägezahn-Basislängen der einzelnen m Teilstrukturen können unterschiedlich sein und mit Licht unterschiedlicher Wellenlänge $\lambda$ ausgewertet werden.

Der gewünschte Code, d.h. die gewünschte Beugungsrichtung, hängt von folgenden Codierungsparametern ab:

– Die räumliche Richtung der Sägezahnfurchen.

– Der Wert der Sägezahn-Steigungen bzw. der Sägezahn-Basislängen.

– Der Wert der Wellenlängen $\lambda$ des zur Auswertung der einzelnen Teilstrukturen verwendeten Lichtes.

Mindestens der Wert eines dieser Codierungsparameter muss von Teilstruktur zu Teilstruktur in der Regel unterschiedlich sein. Es gibt somit eine grosse Vielfalt an Kodiermöglichkeiten.

Beschreibung der Fig. 6

Die Fig. 6 entspricht grösstenteils der Fig. 1, nur dass die Phasenstruktur 2 hier nicht beliebig ist, sondern der Phasenstruktur gemäss Fig. 2 mit m = 4 entspricht. Nach der Durchquerung der Phasenstruktur 2 existieren nur mehr Lichtstrahlen der Beugungsordnung «1». Unter der Annahme, dass alle 4 Teilstrukturen unterschiedliche Sägezahn-Basislängen besitzen, ergibt jede der m = 4 Teilstrukturen den Lichtstrahlen der Beugungsordnung «1» eine andere Richtung, so dass diese nach der Fokussierung durch die Sammellinse 9 in einem anderen Fotodetektor empfangen werden, und zwar die Lichtstrahlen der Teilstruktur 15 in einem Fotodetektor 19, diejenigen der Teilstruktur 16 in einem Fotodetektor 20, diejenigen der Teilstruktur 17 in einem Fotodetektor 21 und diejenigen der Teilstruktur 18 in einem Fotodetektor 22. Der Fotodetektor 19 speist elektrisch über einen Schwellwertschalter 23, der Fotodetektor 20 über einen Schwellwertschalter 24, der Fotodetektor 21 über einen Schwellwertschalter 25 und der Fotodetektor 22 über einen Schwellwertschalter 26 eine gemeinsame digitale, m Eingänge besitzende Auswerteschaltung 27.

Funktionsbeschreibung der Fig. 1 bis Fig. 6

Wie in der Beschreibung der Fig. 1 erwähnt, wird in der Regel ein auf eine Phasenstruktur 2 fallender Leselichtstrahl 5 in eine Gruppe Lichtstrahlen der verschiedensten Beugungsordnungen zerlegt, wenn gewisse Abmessungsbedingungen der Wellenoptik erfüllt sind. Enthält die Phasenstruktur 2 an ihrer Oberfläche Sägezahnfurchen, deren effektive Sägezahnhöhe $h_{eff} = (2 k + 1)\lambda$ mit $k = 1, 2, 3, \ldots$ ist, so reduziert sich die Gruppe der Lichtstrahlen gemäss den Gesetzen der Fourieroptik auf die Lichtstrahlen einer einzigen Beugungsordnung, nämlich der Beugungsordnung «1», wie dies in der Fig. 6 dargestellt ist. Damit die Gesetze der Fourieroptik gelten, muss, wie bereits erwähnt, folgende Ungleichheit erfüllt sein: $3\lambda \leqslant$ Sägezahn-Basislänge.

Besteht ausserdem die Phasenstruktur 2 aus m Teilstrukturen, wie in den Fig. 2, 3 und 4 dargestellt, so entstehen für jede Teilstruktur Lichtstrahlen der Beugungsordnung «1», und zwar jeweils in einer anderen Beugungsrichtung, falls die Teilstrukturen unterschiedliche Codierungsparameter besitzen. Die Lichtstrahlen der m Beugungsrichtungen werden, wie in der Fig. 6 dargestellt, mit Hilfe der gemeinsamen Sammellinse 9 fokussiert. Jeder der m Beugungsrichtungen ist ein Fotodetektor 19, 20, 21 bzw. 22 zugeordnet, welcher die Lichtsignale in elektrische Signale umwandelt und, falls die Signalpegel einen gewissen vorgegebenen Wert überschreiten, am Ausgang des nachgeschalteten Schwellwertschalters 23, 24, 25 bzw. 26 ein digitales Signal über das Vorhandensein- bzw. Nichtvorhandensein von Licht als Logikwert 1 bzw. 0 abgibt. Alle m digitalen Schwellwertschalter-Ausgangssignale bilden ein m Bit Codewort, welches beliebig codiert sein kann und in der gemeinsamen Auswerteschaltung 27 auf bekannte Weise decodiert und ausgewertet wird. Die Fotodetektoren, die Schwellwertschalter und die Auswerteschaltung sind bekannte Bauelemente der Elektronik; sie bilden nicht den Gegenstand eines Patentanspruchs und werden daher nicht näher beschrieben.

Die m Teilstrukturen stellen m Echtheitsmerkmale des Informationsträgers 1 dar, der wie bereits erwähnt z.B. ein Wertdokument sein kann. Sind alle Echtheitsmerkmale korrekt und echt und wird jede der m Teilstrukturen mit Lichtstrahlen der für sie richtigen Längenwelle $\lambda$ angestrahlt, so erscheint am Ausgang der Auswerteschaltung 27 ein Betätigungssignal; denn nur in diesem Fall geben alle m Fotodetektoren gleichzeitig ein Gut-Signal ab. Ist nur eine einzige der m Teilstrukturen nicht in Ordnung, z.B. gefälscht oder nicht vorhanden, so empfängt der zugehörige Detektor entweder ein zu schwaches oder gar kein Signal, was dann eine Unkorrektheit, z.B. eine Fälschung, offenbart und die Verweigerung der Annahme des Wertdokumentes veranlasst.

Die Codierung erfolgt dermassen, dass das Wertdokument mit gewissen Teilstrukturen versehen wird und/oder dass bestimmte Teilstrukturen fehlen. Die Fälschungssicherheit nimmt mit dem Wert von m zu.

Wegen der gewünschten hohen Lichtausbeute kommen bekanntlich nur Phasenstrukturen als Echtheitsmerkmale in Frage. Durch die Konzentration der gesamten Lichtenergie in dem Lichtstrahl einer einzigen Beugungsordnung wird hier eine besonders hohe Lichtausbeute erzielt.

Mit den Lösungen gemäss den Fig. 2, 3 und 4 wird zwar eine hohe Effizienz der Lichtausbeute und eine grosse Kodiervielfalt erzielt, jedoch besitzen alle diese Lösungen noch den Nachteil der Periodizität innerhalb der Teilstrukturen.

Überraschend wurde folgendes gefunden: Wenn hinreichend viele Sägezahnfurchen in der Phasenstruktur 2 vorhanden sind, z.B. 50 Stück je Teilstruktur, und jene Sägezahnfurchen mit den gleichen Codierungsparametern nicht in einer oder mehreren Teilstrukturen konzentriert, sondern gemäss einer Zufallsverteilung gut gemischt über alle m Teilstrukturen verteilt angeordnet sind, vgl. Fig. 5, wird ein gleich gutes Resultat erzielt wie mit den Anordnungen gemäss der Fig. 2, 3 und 4, nur dass die Teilstrukturen jetzt nicht mehr periodisch sind, sondern lokal wie eine einzelne Sägezahnfurche erscheinen.

Zu vermeiden sind dabei jedoch Mischungen beider Lösungsarten, bei denen eine hohe Anzahl Teilstrukturen stochastisch gemischt sind, jedoch jede Teilstruktur weiterhin eine bestimmte, vom Wert 1 verschiedene Anzahl Sägezahnfurchen mit gleichen Codierungsparametern enthält.

Wie Rechnungen zeigen, sind herstellungsbedingte Abweichungen von der exakten Sägezahnform nicht kritisch – z.B. können deren Flanken konkav oder konvex gekrümmt oder sogar treppenartig gestuft bzw. ihre Ecken abgerundet sein. Somit ist die Forderung nach Unempfindlichkeit gegenüber kleinen Herstellungs-Ungenauigkeiten erfüllt, und die Sägezahnfurchen können z.B. mittels Elektronenstrahl-Lithographie in Photoresist hergestellt werden.

## Patentansprüche

1. Synthetisch hergestellte, maschinenlesbare optische Echtheitsmerkmale für Wertdokumente, bestehend aus mindestens einer lichtbeugenden Phasenstruktur (2), dadurch gekennzeichnet, dass die Phasenstruktur (2) an ihrer Oberfläche Sägezahnfurchen besitzt, deren effektive Sägezahnhöhen ($h_{eff}$) gleich einem ungeradzahligen Vielfachen der Wellenlänge ($\lambda$) des verwendeten Lichtes sind und deren Sägezahn-Basislängen mindestens den dreifachen Wert und höchstens den dreissigfachen Wert dieser Wellenlänge ($\lambda$) besitzen.

2. Echtheitsmerkmale nach Anspruch 1, dadurch gekennzeichnet, dass als Codierungsparameter wenigstens eine der Kenngrössen der Sägezahnfurchen dient, nämlich einerseits die Raumrichtung der Sägezahnfurchen oder andererseits die Sägezahn-Basislänge oder die Sägezahn-Steilheit.

3. Echtheitsmerkmale nach Anspruch 1, dadurch gekennzeichnet, dass als Codierungsparameter die Wellenlänge ($\lambda$) des verwendeten Lichtes dient.

4. Echtheitsmerkmale nach Anspruch 2 oder 3, dadurch gekennzeichnet, dass die Phasenstruktur (2) aus einer bestimmten Anzahl (m) Teilstrukturen (15, 16, 17, 18) besteht, innerhalb deren der gleiche Wert der Codierungsparameter gilt, während dieser Wert von Teilstruktur (15, 16, 17, 18) zu Teilstruktur in der Regel unterschiedlich ist.

5. Echtheitsmerkmale nach Anspruch 2 oder 3, dadurch gekennzeichnet, dass die Anzahl (m) der Teilstrukturen gross ist und die Teilstrukturen (15, 16, 17, 18) nur eine einzige Sägezahnfurche enthalten und die für jede dieser Teilstrukturen (15, 16, 17, 18) typischen Codierungsparameter stochastisch über die Gesamtoberfläche der Phasenstruktur (2) verteilt angeordnet sind.

6. Echtheitsmerkmale nach Anspruch 4 oder 5, dadurch gekennzeichnet, dass die einzelnen Teilstrukturen (15, 16, 17, 18) eindimensional in einer Fläche nebeneinander angeordnet sind.

7. Echtheitsmerkmale nach Anspruch 4 oder 5, dadurch gekennzeichnet, dass die einzelnen Teilstrukturen (15, 16, 17, 18) zweidimensional in einer Fläche nebeneinander angeordnet sind.

8. Echtheitsmerkmale nach einem der Ansprüche 1 bis 7, dadurch gekennzeichnet, dass die Phasenstruktur (2) soviele unterschiedliche Werte des bzw. der Codierungsparameter besitzt, wie das Wertdokument Echtheitsmerkmale aufweist.

9. Echtheitsmerkmale nach einem der Ansprüche 1 bis 8, dadurch gekennzeichnet, dass die Phasenstruktur (2) lichtundurchlässig und mittels optischer Reflexionsanordnungen auslesbar ist.

10. Echtheitsmerkmale nach einem der Ansprüche 1 bis 8, dadurch gekennzeichnet, dass die Phasenstruktur (2) lichtdurchlässig und mittels optischer Transmissionsanordnungen auslesbar ist.

11. Echtheitsmerkmale nach einem der Ansprüche 1 bis 10, dadurch gekennzeichnet, dass zum Auslesen aller Sägezahnfurchen mit dem gleichen Codierungsparameterwert jeweils ein in der zugehörigen Beugungsrichtung angeordneter Fotodetektor (19, 20, 21, 22) mit nachgeschaltetem Schwellwertschalter (23, 24, 25, 26) vorgesehen ist, wobei alle diese Schwellwertschalter eine gemeinsame Auswerteschaltung (27) besitzen.

**Revendications**

1. Marques optiques d'authenticité de documents de valeur, produites synthétiquement, lisibles par machine, constituées par au moins une structure de phase (2) diffringents et caractérisées en ce que la structure de phase (2) présente à sa surface des sillons en dent de scie dont les hauteurs effectives de dent de scie ($h_{eff}$) sont égales à un multiple impair de la longueur d'onde ($\lambda$) de la lumière utilisée et dont les longueurs de base de dent de scie sont égales au moins à trois fois et au plus à trente fois la valeur de cette longueur d'onde ($\lambda$).

2. Marques d'authenticité selon revendication (1), caractérisées en ce qu'une au moins des grandeurs caractéristiques de sillons en dent de scie constitue le paramètre de codage, à savoir d'une part la direction spatiale des sillons en dent de scie ou d'autre part la longueur de base ou la rampe de la dent de scie.

3. Marque d'authenticité selon revendication 1, caractérisée en ce que la longueur d'onde ($\lambda$) de la lumière utilisée constitue le paramètre de codage.

4. Marque d'authenticité selon une des revendications 2 ou 3, caractérisées en ce que la structure de phase (2) est constituée par un nombre déterminé (m) de structures partielles (15, 16, 17, 18) à l'intérieur desquelles le paramètre de codage présente la même valeur, tandis que cette valeur diffère généralement d'une structure partielle (15, 16, 17, 18) à l'autre.

5. Marques d'authenticités selon une des revendications 2 ou 3, caractérisées en ce que le nombre (m) de structures partielles est élevé; les structures partielles (15, 16, 17, 18) ne comportent chacune qu'un seul sillon en dent de scie; et les paramètre de codage typiques de chacune de ces structures partielles (15, 16, 17, 18) sont répartis stochastiquement sur toute la surface de la structure de phase (2).

6. Marques d'authenticité selon une des revendications 4 ou 5, caractérisées par la juxtaposition unidimensionnelle des diverses structures partielles (15, 16, 17, 18) sur une surface.

7. Marques d'authenticité selon une des revendications 4 ou 5, caractérisés par une juxtaposition bidimensionnelle des diverses structures partielles (15, 16, 17, 18) sur une surface.

8. Marques d'authenticité selon une quelconque des revendications 1 à 7, caractérisées en ce que la structure de phase (2) présente un nombre de valeurs différent du ou des paramètres de codage égal à celui des marques d'authenticité du document de valeur.

9. Marques d'authenticité selon une quelconque des revendications 1 à 8, caractérisées en ce que la structure de phase (2) est opaque et lisible par des dispositifs optiques à réflexion.

10. Marques d'authenticité selon une quelconque des revendications 1 à 8, caractérisées en ce que la structure de phase (2) est transparente et lisible par des dispositifs optiques à transmission.

11. Marques d'authenticité selon une quelconque des revendications 1 à 10, caractérisées en ce qu'un photodétecteur (19, 20, 21, 22) est disposé, avec un interrupteur à seuil en aval (23, 24, 25, 26), suivant la direction de diffraction correspondante pour la lecture de tous les sillons en dent de scie présentant la même valeur du paramètre de codage, tous ces interrupteurs à seuil comportant un circuit traducteur (27) commun.

## Claims

1. Synthetically produced, machine-readable, optical authenticity features for value documents, comprising at least one light-diffracting phase structure (2) characterised in that at its surface the phase structure (2) has sawtooth grooves whose effective sawtooth heights ($h_{eff}$) are equal to an odd multiple of the wavelength ($\lambda$) of the light used and whose sawtooth base lenghts are at least three times and at most thirty times said wavelength ($\lambda$).

2. Authenticity features according to claim 1 characterised in that at least one of the characteristic parameters of the sawtooth grooves serves as a coding parameter namely on the one hand the direction in space of the sawtooth grooves or on the other hand the sawtooth base lenght or the sawtooth slope.

3. Authenticity features according to claim 1 characterised in that the wavelength ($\lambda$) of the light used serves as a coding parameter.

4. Authenticity features according to claim 2 or claim 3 characterised in that the phase structure (2) comprises a given number (m) of component structures (15, 16, 17, 18) within which the same value of the coding parameters applies, while said value is generally different from one component structure (15, 16, 17, 18) to another.

5. Authenticity features according to claim 2 or claim 3 characterised in that the number (m) of component structures is high and the component structures (15, 16, 17, 18) contain only a single sawtooth groove and the coding parameters which are typical in respect of each of said component structures (15, 16, 17, 18) are arranged stochastically distributed over the entire surface of the phase structure (2).

6. Authenticity features according to claim 4 or claim 5 characterised in that the individual component structures (15, 16, 17, 18) are arranged in juxtaposed relationship one-dimensionally in a surface.

7. Authenticity features according to claim 4 or claim 5 characterised in that the individual component structures (15, 16, 17, 18) are arranged in juxtaposed realtionship two-dimenionsally in a surface.

8. Authenticity features according to one of claims 1 to 7 characterised in that the phase structure (2) has as many different values of the coding parameter or parameters, as the value document has authenticity features.

9. Authenticity features according to one of claims 1 to 8 characterised in that the phase structure (2) is opaque and can be read out by means of optical reflection arrangements.

10. Authenticity features according to one of claims 1 to 8 characterised in that the phase structure (2) is translucent and can be read out by means of optical transmission arrangements.

11. Authenticity features according to one of claims 1 to 10 characterised in that, for purpose of reading out all sawtooth grooves with the same coding parameter value, there is provided a respective photodetector (19, 20, 21, 22) disposed in the associated direction of diffraction, with a threshold switch (23, 24, 25, 26) disposed on the output side of the photodetector, wherein all said threshold switches have a common evaluation circuit (27).

0 075 674

1/2

Fig. 1

Fig. 2

Fig. 3

2

7

# Fig. 4

**2**

15   16

18   17

# Fig. 5

**2**

# Fig. 6

19  23
24
20  25
21
22  26
27

3

15
16
17
18

4  5  2  9

1

9